# EUROPÄISCHE PATENTSCHRIFT

(11) **EP 0 989 653 B1**
(45) Veröffentlichungstag und Bekanntmachung des Hinweises auf die Patenterteilung: **20.08.2008**
(21) Anmeldenummer: 99250335.9
(22) Anmeldetag: 22.09.1999
(51) Int. Cl.: H02H 1/06

(54) **Schaltungsanordnung zur Gewinnung von Hilfsenergie zum Betrieb einer Steuereinheit**
Circuit arrangement for providing auxiliary energy for operating a control unit
Circuit pour obtenir une énergie auxiliaire pour actionner une unité de contrôle

(30) Priorität: 25.09.1998 DE 19845826; 03.11.1998 DE 19851973
(43) Veröffentlichungstag der Anmeldung: 29.03.2000
(73) Patentinhaber: SIEMENS AKTIENGESELLSCHAFT, 80333 München (DE)
(72) Erfinder: Baumgärtl,Ulrich, 13599 Berlin (DE); Röhl, Wolfgang, 13503 Berlin (DE); Hochgraef, Holger, 16845 Wusterhausen (DE)

(56) Entgegenhaltungen:
- DE-A- 19 744 202
- FR-A- 2 273 389

## Beschreibung

Die Erfindung betrifft eine Schaltungsanordnung zur Gewinnung von Hilfsenergie zum Betrieb einer Steuereinheit eines Schaltgerätes aus einem durch einen Hauptstrompfad des Schaltgerätes fließenden Strom. Die Steuereinheit kann insbesondere ein elektronischer Überstromauslöser sein, der seinerseits einen Auslösemagnet betätigt, um Schaltkontakte des Schaltgerätes, z. B. eines Leistungsschalters, zu öffnen.

Steuereinheiten der hier betrachteten Art, z.B. strom- oder spannungsüberwachende Baugruppen, benötigen zu ihrem Betrieb Hilfsenergie in Form einer Versorgungsspannung, die möglichst von dem betreffenden Netz selber bereitgestellt werden soll, d. h. ohne die Bereitstellung fremder Energie durch eine zusätzliche Energiequelle.

In Wechselspannungsnetzen kann diese Hilfsenergie meist problemlos durch den Einsatz magnetischer Übertrager, insbesondere Stromwandler gewonnen werden. Beispiele hierfür sind der WO 98/13917 oder der US 4,562,506 zu entnehmen. FR-A-2.273.389 offenbart eine Schaltungsanordnung zur Gewinnung von Hilfsenergie zum Betrieb einer Steuereinheit, wobei die Hilfsenergie aus einem durch den Hauptstrompfad des Schaltgeräts fliesenden Strom gewonnen wird, wobei durch diesen Strom an einer Impedanz eine Spannung abfällt, die in einem Übertrager transformiert wird. In Gleichspannungsnetzen besteht diese Möglichkeit nicht. Es verbleibt nur die Anwendung einer Fremdenergiequelle oder eines Hilfsspannungsnetzes.

Der Erfindung liegt die Aufgabe zugrunde, eine Schaltungsanordnung der eingangs genannten Art anzugeben, die eine zum Betrieb der Steuereinheit eines Schaltgerätes benötigte Hilfsenergie aus dem Hauptstrompfad bereitstellt und auch in einem Gleichstromnetz anwendbar ist.

Erfindungsgemäß wird die genannte Aufgabe dadurch gelöst, daß aus vom Strom im Hauptstrompfad abhängigen Spannung durch Takten, Transformieren auf die Sekundärseite eines Übertragers und Gleichrichten eine Versorgungsgleichspannung für die Steuereinheit gewonnen wird, wobei die genannte Spannung an einer Reihenschaltung aus einem Übertrager und einem in Abhängigkeit von dessen Sekundärspannung durch eine Ansteuerschaltung pulsweitenmoduliert gesteuerten Feldeffekttransistor angelegt ist und die Ansteuerschaltung über einen Schalter zeitweise mit einer Startgleichspannung beaufschlagbar ist.

Das durch den Übertrager und den Feldeffekttransistor gebildete Schaltnetzteil setzt eine sehr niedrige Spannung auf die für den Betrieb der Steuereinheit benötigten Werte herauf.

Die genannte niedrige Spannung kann z. B. durch einen Abgriff an einem stromdurchflossenen Leiter des Hauptstrompfades des Schaltgerätes gewonnen werden. Dies ist mit sehr geringem Aufwand durch eine zusätzliche Klemmstelle in Verbindung mit einer Anschlußstelle am Schaltgerät zu verwirklichen. Weitere gleichfalls mit geringem Aufwand durchführbare Möglichkeiten zur Gewinnung der niedrigen Spannung bestehen darin, einen in Reihe mit dem Hauptstrompfad oder parallel hierzu geschalteten Widerstand vorzusehen. Dabei braucht der betreffende Widerstand kein gesondertes Bauelement zu sein, sondern kann z. B. durch eine örtliche Verringerung des Querschnittes eines stromführenden Leiters des Hauptstrompfades bzw. eine Aufteilung in parallele Zweige ausgebildet sein.

Durch den Einsatz eines niederohmigen Feldeffekttransistors ist es möglich, auch bei kleinsten Spannungen noch einen relativ hohen Strom auf der Sekundärseite des Übertragers zu gewinnen.

Die Hilfsenergie für den Betrieb der Ansteuerschaltung des Feldeffekttransistors wird zweckmäßig durch eine Hilfswicklung am Übertrager gewonnen.

Wesentlich für Schaltungsanordnung nach der Erfindung ist der Start des Schaltnetzteils durch die vorübergehende Zuschaltung einer Startgleichspannung. Hierdurch werden dem Feldeffekttransistor und seiner Ansteuerschaltung eine Versorgungsspannung in Höhe von ca. 10V zugeführt.

Die Startgleichspannung kann durch eine Batterie, einen Pufferkondensator oder eine andere geeignete Energiequelle bereitgestellt werden.

Die Ladung der Batterie oder des Kondensators kann z. B. aus einer Solarzelle oder aus dem Netz selber erfolgen.

Für den letztgenannten Fall ist nach einer Weiterbildung der Erfindung eine Schaltung vorgesehen, die einen als Stromwandler eingesetzten Übertrager aufweist, dessen Primärwicklung vom Netzstrom durchflossen wird und dessen in seiner Sekundärwicklung bei einer Änderung des Primärstromes induzierte Spannung nach Gleichrichtung zur Ladung einer aufladbaren Batterie oder eines Kondensators benutzt wird.

Die Zuschaltung der Startgleichspannung wird zweckmäßig durch den Strom im Hauptstrompfad gesteuert, z. B. über einen Magnetschalter, der bei Unterschreiten eines bestimmten Wertes des Stromes die Startgleichspannung zuschaltet.

Die Schaltungsanordnung nach der Erfindung ist nicht nur für Gleichstrom, sondern ist vorteilhaft auch in Wechselspannungsnetzen verwendbar, wenn dem Schaltnetzteil ein Gleichrichter vorgeschaltet wird. Zweckmäßig wird dazu ein gesteuerter Gleichrichter verwendet bzw. wird das Schaltnetzteil nur in Abschnitten einer Halbwelle der Wechselspannung betrieben.

Die Erfindung soll nachstehend anhand von Ausführungsbeispielen näher erläutert werden. In den zugehörigen Zeichnung zeigen
- Fig. 1: den Schaltungsaufbau eines erfindungsgemäßen Schaltnetzteils zur Gewinnung von Hilfsenergie und
- Fig. 2: eine Schaltung analog zu der nach Fig. 1 im Zusammenwirken mit einer aus dem Netz gewonnenen Startgleichspannung.
- Fig. 3: eine bidirektionale Ausführung eines Halbleiterschalters.

Die Ausführungsbeispiele gehen von einem auf Überstrom überwachten Gleichspannungsnetz aus. Im Hauptstrompfad 1 eines als Leistungsschalter ausgebildeten Schaltgerätes LS für ein Gleichspannungsnetz ist ein Widerstand R_{S} gezeigt, dessen Spannung zur Gewinnung der Hilfsenergie verwertet wird. Mit der Hilfsenergie soll die Stromüberwachung erfolgen und im Bedarfsfall das Schaltgerät LS mittels einer Steuereinheit A geschaltet werden. Der Widerstand R_{S} kann ein für Meßzwecke vorgesehener Widerstand sein. Der Widerstand braucht jedoch nicht körperlich als gesondertes Bauelement vorhanden zu sein, da an dem Hauptstrompfad bzw. dem zugehörigen stromdurchflossenen Leiter z. B. einer Anschlußschiene, eine für die Zwecke der Erfindung geeignete Spannung abzugreifen ist.

Die über dem Widerstand R_{S} abgenommene niedrige Spannung wird auf die Primärwicklung W₁ eines Übertragers T und einem Halbleiterschalter V₁ geführt, der vorzugsweise als Feldeffekttransistor ausgebildet sein kann.. Der Halbleiterschalter V₁ bildet zusammen mit dem Übertrager T und seiner zugehörigen Ansteuerschaltung PWM die als Pulsweitenmodulations-Steuerung ausgebildet ist, ein Schaltnetzteil, das die extrem niedrige Spannung des Widerstandes R_{S} auf die von einer Elektronik auf der Sekundärseite des Übertragers T, die durch die Sekundärwicklung W₂ realisiert ist, benötigten Werte heraufsetzt.

Die Spannung der Sekundärwicklung W₂ wird, wie hier mit einer Gleichrichterdiode D₁ und einem Speicherkondensator C₁ angedeutet ist, gleichgerichtet und steht dann einer Steuereinheit A des Schaltgerätes LS zur Verfügung.

Der als Feldeffekttransistor ausgebildete Halbleiterschalter V₁ ist sehr niederohmig, so daß es möglich ist, mit sehr kleinen Widerstandswerten für den Widerstand R_{S} zu arbeiten.

Die Spannungsversorgung der Pulsweitenmodulations-Steuerung PWM erfolgt durch eine Hilfswicklung W_{H} am Übertrager T, dessen Spannung auf einen Kondensator C₂ geführt wird. Die Spannung auf der Sekundärseite des Übertragers T wird konstantgeregelt über die Frequenz der Ansteuerschaltung PWM, der zu diesem Zweck über einen Trennverstärker 2 die gleichgerichtete Spannung der Sekundärwicklung W₂ als Eingangssignal zugeführt wird.

Zum Anschwingen der Schaltung wird eine Startgleichspannung U_{S} benötigt, die am Beginn des Betriebes der Schaltung über einen Schalter S zugeschaltet wird. Der Schalter S wird durch den Strom in dem Hauptstrompfad 1 magnetgesteuert geschaltet, d. h. er wird ab einer bestimmten Stromhöhe in dem Hauptstrompfad 1 wieder ausgeschaltet, wenn das Schaltnetzteil genügend Energie überträgt, um auch seinen eigenen Betrieb aufrechtzuerhalten.

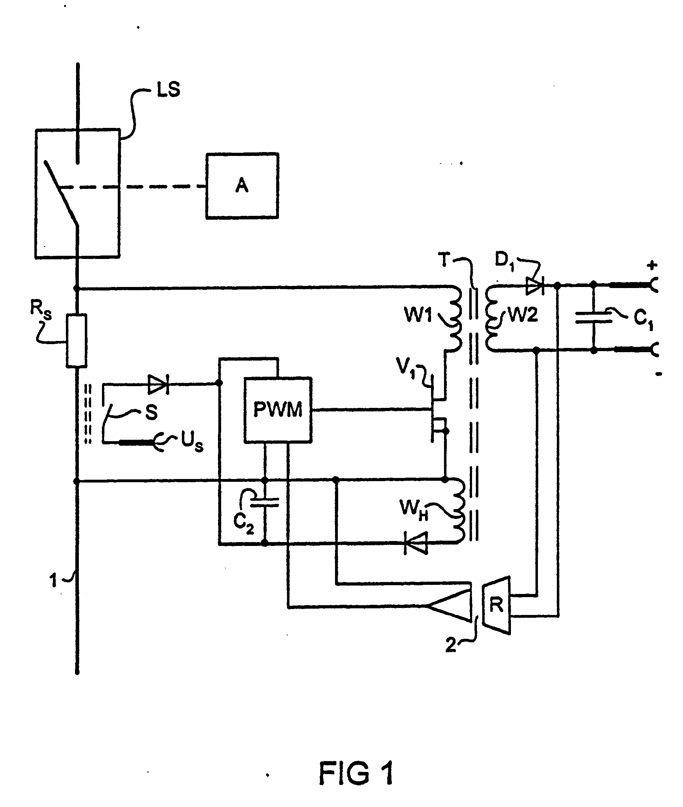

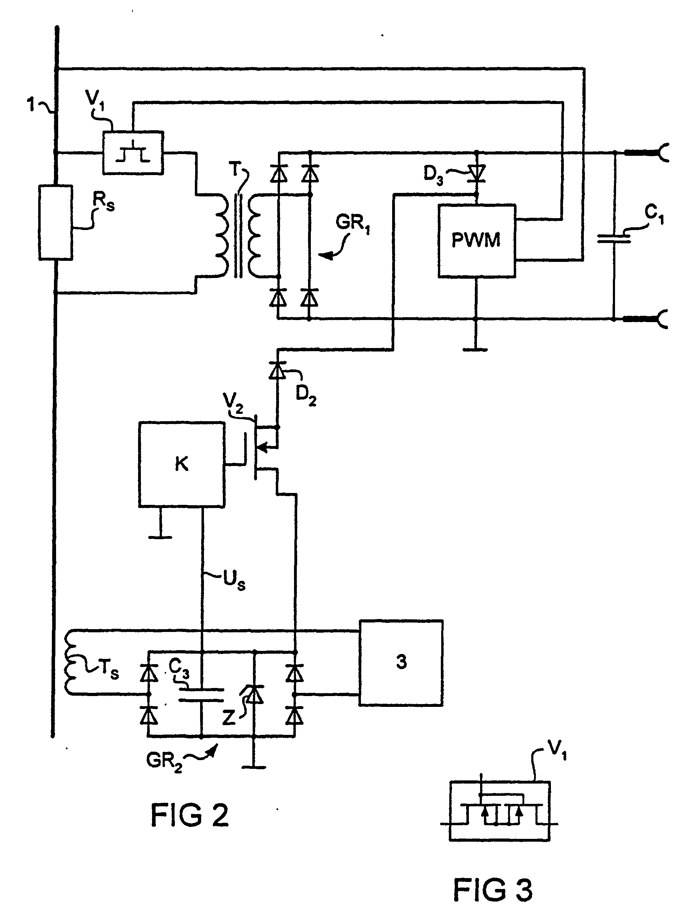

Fig. 2 zeigt nun eine spezielle Startschaltung für ein Schaltnetzteil, das analog zu dem nach Fig. 1 aufgebaut ist.

Der Unterschied zum Schaltungsaufbau nach Fig. 1 besteht lediglich darin, daß die Gleichrichtung auf der Sekundärseite des Übertragers T durch eine Gleichrichterbrücke GR₁ realisiert und die Ansteuerschaltung PWM des Halbleiterschalters V₁ sekundärseitig angeordnet ist.

Die Startgleichspannung U_{S} für die Ansteuerschaltung PWM des Halbleiterschalters V₁ wird durch das überwachte Netz selber gewonnen, d. h. durch den Strom in dem Hauptstrompfad 1. Hierzu dient ein Stromwandler T_{S}. Eine Stromänderung, z. B. ein ansteigender Strom, in dem Hauptstrompfad 1 induziert auf der Sekundärseite des Stromwandlers T_{S} eine Spannung, die in einer Gleichrichterbrücke GR₂ gleichgerichtet und auf einen Speicherkondensator C₃ gegeben wird. Am Speicherkondensator C₃ erfolgt eine Spannungsbegrenzung durch eine Zenerdiode Z.

Die in Fig. 1 gezeigte Schaltfunktion des Schalters S wird in dem Ausführungsbeispiel nach Figur 2 durch einen Feldeffekttransistor V₂ realisiert, der seine Schaltfreigabe von einem Komparator K erhält, welcher die Höhe der Startgleichspannung U_{S} überwacht. Wird am Speicherkondensator C₃ eine entsprechend hohe Startgleichspannung U_{S} erreicht, so wird die Kondensatorenergie auf die Ansteuerschaltung PWM des Halbleiterschalters V₁ geleitet und damit das Anschwingen und die nachfolgende Eigenversorgung des Schaltnetzteils mit Hilfe des Widerstandes R_{S} gestartet.

Zur Trennung der Kreise "Startgleichspannung" und "Schaltnetzteil" sind Trenndioden D₂ und D₃ vorgesehen.

Die am Stromwandler T_{S} sekundärseitig gewonnene Spannung kann neben der Gewinnung der Startspannung für das Schaltnetzteil darüber hinaus für eine dynamische Stromerfassung in einer Stromauswerteschaltung 3 genutzt werden.

Wie bereits erwähnt, kann die beschriebene Schaltungsanordnung auch in Wechselstrom-Schaltgeräten eingesetzt werden. In diesem Fall empfiehlt es sich, als Halbleiterschalter V1 eine bidirektional arbeitende Kombination von Feldeffekttransistoren gemäß der Figur 3 zu benutzen. Hierdurch werden beide Halbwellen der am Widerstand R_{S} abfallenden Spannung ausgenutzt.

## Patentansprüche

1. Schaltungsanordnung zur Gewinnung von Hilfsenergie zum Betrieb einer Steuereinheit (A) eines Schaltgerätes (LS) aus einem durch einen Hauptstrompfad (1) des Schaltgerätes (LS) fließenden Strom,
**dadurch gekennzeichnet, daß**
aus einer vom Strom im Hauptstrompfad (1) abhängigen Spannung durch Takten, Transformieren auf die Sekundärseite eines Übertragers (T) und Gleichrichten eine Versorgungsgleichspannung für die Steuereinheit (A) gewonnen wird, wobei die genannte Spannung an einer Reihenschaltung aus einem Übertrager (T) und einem in Abhängigkeit von dessen Sekundärspannung durch eine Ansteuerschaltung (PWM) pulsbreitenmoduliert gesteuerten Halbleiterschalter (V₁) angelegt ist, und die Ansteuerschaltung (PWM) über einen Schalter (S) zeitweise mit einer Startgleichspannung (Uₛ) beaufschlagbar ist.

2. Schaltungsanordnung nach Anspruch 1,
**dadurch gekennzeichnet, daß**
der Übertrager (T) zur Spannungsversorgung der Ansteuerschaltung (PWM) des Halbleiterschalters (V₁) mit einer Hilfswicklung (W_{H}) versehen ist.

3. Schaltungsanordnung nach Anspruch 1 oder 2,
**dadurch gekennzeichnet, daß**
der Schalter (S) zur zeitweisen Zuschaltung der Startgleichspannung (Uₛ) ein durch den Strom im Leiter betätigter Magnetschalter ist.

4. Schaltungsanordnung nach Anspruch 1 oder 2,
**dadurch gekennzeichnet, daß**
der Schalter (S) zur zeitweisen Zuschaltung der Startgleichspannung (Uₛ) durch einen Feldeffekttransistor (V₂) realisiert ist.

5. Schaltungsanordnung nach Anspruch 4,
**dadurch gekennzeichnet, daß**
die Freigabe des Feldeffekttransistors (V₂) zum Schalten in den leitenden Zustand durch die Startgleichspannung (Uₛ) gesteuert ist.

6. Schaltungsanordnung nach einem der vorhergehenden Ansprüche,
**dadurch gekennzeichnet, daß**
sie zur Bereitstellung der Startgleichspannung (Uₛ) eine Batterie aufweist.

7. Schaltungsanordnung nach einem der Ansprüchel bis 5,
**dadurch gekennzeichnet, daß**
sie zur Bereitstellung der Startgleichspannung (Uₛ) einen Speicherkondensator (C₃) aufweist.

8. Schaltungsanordnung nach einem der Anspruch 6 oder 7,
**dadurch gekennzeichnet, daß**
die Batterie oder der Speicherkondensator (C₃) von einer Solarzelle nachladbar ist.

9. Schaltungsanordnung nach einem der Ansprüche 6 oder 7,
**dadurch gekennzeichnet, daß**
die Batterie oder der Speicherkondensator (C₃) von einer aus der Sekundärwicklung eines mit dem Hauptstrompfad (1) des stromführenden Strom des Leiters magnetisch gekoppelten Stromwandlers (Tₛ) bei Stromänderung in dem stromführenden Leiter gewonnenen und gleichgerichteten Spannung nachladbar ist.

10. Schaltungsanordnung nach einem der vorhergehenden Ansprüche,
**dadurch gekennzeichnet, daß** der stromführende Leiter der Hauptstrompfad (1) eines Gleichspannungsnetzes ist.

11. Schaltungsanordnung nach einem der Ansprüche 1 bis 9,
**dadurch gekennzeichnet, daß**
der stromführende Leiter der Hauptstrompfad eines Wechselspannungsnetzes und die am Hauptstrompfad (1) abgenommene Spannung gleichgerichtet ist.

## Claims

1. Circuit arrangement for obtaining auxiliary energy for operation of a control unit (A) of a switching device (LS) from a current flowing through a main current path (1) in the switching device (LS),
**characterized in that**
a supply DC voltage for the control unit (A) is obtained from a voltage, which is dependent on the current in the main current path (1), by pulsing, transformation on the secondary side of a transformer (T) and rectification, with the said voltage being applied to a series circuit comprising a transformer (T) and a semiconductor switch (V₁), which is controlled on a pulse-width modulated basis by a drive circuit (PWM) as a function of the secondary voltage of the transformer (T), and in which case a starting DC voltage (U_{S}) can be applied at times to the drive circuit (PWM) via a switch (S).

2. Circuit arrangement according to Claim 1,
**characterized in that**
the transformer (T) is provided with an auxiliary winding (W_{H}) in order to supply voltage to the drive circuit (PWM) for the semiconductor switch (V₁).

3. Circuit arrangement according to Claim 1 or 2,
**characterized in that**
the switch (S) is a magnetic switch, which is operated by the current in the conductor, in order to switch the starting DC voltage (Uₛ) on at times.

4. Circuit arrangement according to Claim 1 or 2,
**characterized in that**
the switch (S) is in the form of a field-effect transistor (V₂), in order to switch the starting DC voltage (Uₛ) on at times.

5. Circuit arrangement according to Claim 4,
**characterized in that**
the starting DC voltage (Uₛ) allows the field-effect transistor (V₂) to be switched on.

6. Circuit arrangement according to one of the preceding claims,
**characterized in that**
the circuit arrangement has a battery in order to provide the starting DC voltage (Uₛ).

7. Circuit arrangement according to one of Claims 1 to 5,
**characterized in that**
the circuit arrangement has an energy-storage capacitor (C₃) in order to provide the starting DC voltage (Uₛ).

8. Circuit arrangement according to one of Claims 6 or 7,
**characterized in that**
the battery or the energy-storage capacitor (C₃) can be recharged by a solar cell.

9. Circuit arrangement according to one of Claims 6 or 7,
**characterized in that**
the battery or the energy-storage capacitor (C₃) can be recharged from a rectified voltage which is obtained from the secondary winding of a current transformer (Tₛ) (which is magnetically coupled to the main current path (1) of the current carried in the conductor) when the current in the current-carrying conductor changes.

10. Circuit arrangement according to one of the preceding claims,
**characterized in that**
the current-carrying conductor is the main current path (1) of a DC voltage power supply system.

11. Circuit arrangement according to one of Claims 1 to 9,
**characterized in that**
the current-carrying conductor is the main current path in an AC voltage power supply system, and the voltage tapped off from the main current path (1) is rectified.

## Revendications

1. Circuit d'obtention d'énergie auxiliaire pour faire fonctionner une unité ( A ) de commande d'un appareil ( LS ) de coupure à partir d'un courant passant par un trajet ( 1 ) de courant principal de l'appareil ( LS ) de coupure,
**caractérisé en ce que**
à partir d'une tension qui dépend du courant dans le trajet ( 1 ) de courant principal on obtient, par cadencement, transformation du côté secondaire d'un transformateur ( T ) et redressement, une tension continue d'alimentation de l'unité ( A ) de commande, ladite tension étant appliquée à un circuit série constitué d'un transformateur ( T ) et d'un commutateur ( V₁ ) à semi-conducteur commandé, en étant modulé en largeur d'impulsion, par un circuit ( PWM ) de commande en fonction de la tension secondaire du transformateur ( T ) et le circuit ( PWM ) de commande peut être alimenté par un interrupteur ( S ) de temps en temps en une tension ( U_{S} ) continue de début.

2. Circuit suivant la revendication 1,
**caractérisé en ce que**
le transformateur ( T ) pour l'alimentation en tension du circuit ( PWM ) de commande du commutateur ( V₁ ) à semi-conducteur est muni d'un enroulement ( W_{H} ) auxiliaire.

3. Circuit suivant la revendication 1 ou 2,
**caractérisé en ce que**
l'interrupteur ( S ) est un interrupteur à aimant actionné par le courant dans le conducteur pour l'application de temps en temps de la tension ( U_{S} ) continue de début.

4. Circuit suivant la revendication 1 ou 2,
**caractérisé en ce que**
l'interrupteur ( S ) est, pour l'application de temps en temps de la tension ( U_{S} ) continue de début, réalisé par un transistor ( V₂ ) à effet de champ.

5. Circuit suivant la revendication 4,
**caractérisé en ce que**
le déblocage du transistor ( V₂ ) à effet de champ pour le mettre à l'état passant est commandé par la tension ( U_{S} ) continue de début.

6. Circuit suivant l'une des revendications précédentes,
**caractérisé**
**en ce qu'**il a une batterie pour disposer de la tension ( U_{S} ) continue de début.

7. Circuit suivant l'une des revendications 1 à 5,
**caractérisé**
**en ce qu'**il a un condensateur ( C₃ ) d'emmagasinage pour la mise à disposition de la tension ( U_{S} ) continue de début.

8. Circuit suivant l'une des revendications 6 ou 7,
**caractérisé en ce que**
la batterie ou le condensateur ( C₃ ) d'emmagasinage peuvent être rechargés par une pile solaire.

9. Circuit suivant l'une des revendications 6 ou 7,
**caractérisé en ce que**
la batterie ou le condensateur ( C₃ ) d'emmagasinage peut être rechargé par une tension redressée et obtenue lors d'une variation de courant dans le conducteur dans lequel passe le courant, à partir de l'enroulement secondaire d'un convertisseur ( Tₛ ) de courant couplé magnétiquement avec le trajet ( 11 ) de courant principal passant dans le conducteur.

10. Circuit suivant l'une des revendications précédentes,
**caractérisé en ce que**
le conducteur dans lequel passe le courant du trajet ( 1 ) de courant principal est un réseau de tension continue.

11. Circuit suivant l'une des revendications 1 à 9,
**caractérisé en ce que**
le conducteur dans lequel passe le courant du trajet de courant principal est le trajet ( 1 ) de courant principal d'un réseau de tension alternative et la tension prélevée sur le trajet ( 1 ) de courant principal est redressée.
